# EUROPÄISCHE PATENTSCHRIFT

(11) **EP 2 003 387 B1**
(45) Veröffentlichungstag und Bekanntmachung des Hinweises auf die Patenterteilung: **03.11.2010**
(21) Anmeldenummer: 07011492.1
(22) Anmeldetag: 12.06.2007
(51) Int. Cl.: F16L 55/033, F16L 9/21, F01N 1/02

(54) **Vorrichtung zum Dämpfen von Schallgeräuschen, Heizkreislauf und Wasserkreislauf**
Device for suppressing acoustic noise, heating circuit and water circuit
Dispositif destiné à l'amortissement de bruits acoustiques, circuit de chauffage et circuit d'eau

(43) Veröffentlichungstag der Anmeldung: 17.12.2008
(73) Patentinhaber: G + H Schallschutz GmbH, 67059 Ludwigshafen (DE)
(72) Erfinder: Baumann, Walter, 67059 Ludwigshafen (DE); Brochhagen, Kai, 67059 Ludwigshafen (DE)
(74) Vertreter: Grünecker, Kinkeldey, Stockmair & Schwanhäusser Anwaltssozietät

(56) Entgegenhaltungen:
- EP-A- 0 911 567
- EP-A- 1 010 869
- EP-A- 1 291 570
- DE-A1- 19 533 270
- FR-A- 2 543 342
- US-A- 1 975 861
- US-A- 2 798 569
- US-A- 3 142 354

## Beschreibung

Die Erfindung betrifft eine Vorrichtung zum Dämpfen von Schallgeräuschen, einen Heizkreislauf und einen Wasserkreislauf.

Aus dem Stand der Technik ist bekannt, Schallgeräusche von Flüssigkeiten beispielsweise dadurch zu dämpfen, dass die Flüssigkeit eine poröse Schicht durchfließt. Nachteilig bei dieser Vorgehensweise ist, dass durch die Verwendung einer porösen Schicht, der Temperatur- und der Druckbereich eingeschränkt sind, in denen eine solche Vorrichtung mit poröser Schicht verwendet werden kann.

US 1,975,861 offenbart einen Dämpfer mit einer äußeren Hülle und einer inneren perforierten Hülle, wobei sich zwischen diesen Hüllen ein ringförmiger Abstand befindet, in den lärmabsorbierende Medien eingebracht werden können. Zwischen den Hüllen können sich zudem querverlaufende Scheidewände befinden, die Resonanzkammern ausbilden. Durch die Perforationen wird eine Kommunikation zwischen dem Inneren der Hülle und den Resonanzkammern ermöglicht.

Der Erfindung liegt die Aufgabe zugrunde, das Dämpfen von Schallgeräuschen flexibel in verschiedenen Anwendungsbereichen einsetzbar zu machen.

Diese Aufgabe wird gelöst mit einer Vorrichtung nach Anspruch 1 sowie einem Heizkreislauf und/oder Wasserkreislauf nach Anspruch 16.

Bevorzugte Ausführungsformen sind in den abhängigen Ansprüchen offenbart.

Die Vorrichtung zum Dämpfen von Schallgeräuschen umfasst, zwischen einem Außenrohr und einem perforierten Innenrohr gelegen, ein Schallabsonssystem, das eine Temperaturbeständigkeit von mindestens 80 Grad Celsius aufweist , wobei das Schallabsorptionssystem eine Mehrzahl von elastischen Ringscheiben umfasst, wobei die Ringscheiben gummielastisch sein können. Durch das perforierte Innenrohr kann im Bereich innerhalb des perforierten Innenrohrs und im Bereich zwischen Außen- und perforiertem Innenrohr jeweils der gleiche Druck vorliegen. Da das vorliegende Schallabsorptionssystem eine Temperaturbeständigkeit von mindestens 80 Grad Celsius aufweist, ist es möglich, die Vorrichtung zum Dämpfen von Schallgeräuschen beispielsweise auch in Wasser und/oder Heizkreisläufen einzusetzen, in denen hohe Wassertemperaturen vorliegen. Eine Temperaturbeständigkeit bis 90 Grad Celsius oder bis 100 Grad Celsius ist bevorzugt.

Durch die Symmetrie der Ringscheiben kann die Dämpfung der Schallgeräusche leicht vorhergesagt werden.

In einem Bereich von beispielsweise 3 m Länge können z.B. zwischen 100 und 120 solcher Ringscheiben vorhanden sein.

Erfindungsgemäß umfasst eine elastische Ringscheibe zwei, drei, vier oder mehr Lagen elastischer Scheiben, die aufeinander aufgebracht sind. Die Lagen können gummielastisch sein. Durch die Verwendung mehrerer Lagen elastischer Scheiben ist es beispielsweise möglich, Scheiben mit verschiedenen Elastizitäten oder aus unterschiedlichem Material zu verwenden, wodurch es möglich ist, das Dämpfungsergebnis der Schallgeräusche zu verbessern. Beispielsweise kann eine einzelne elastische Scheibe 4 mm dick sein.

Vorteilhaft ist es insbesondere, wenn Schall in verschiedenen Frequenzen, insbesondere in einem möglichst breitbandigen Frequenzbereich gedämpft werden kann. Hierbei sind Frequenzen bis 20 kHz (menschliche Hörgrenze) relevant.

Die Vorrichtung weist vorzugsweise insgesamt eine Temperaturbeständigkeit von 80 Grad Celsius auf, zudem kann die Vorrichtung eine Druckbeständigkeit bis 25 bar aufweisen, wodurch beispielsweise die Verwendung dieser Vorrichtung in Wasser- und/oder Heizkreisläufen mit hohen Drücken möglich ist. Eine Druckbeständigkeit bis 30 oder 40 bar ist bevorzugt. Die angegebenen Druckwerte beziehen sich hierbei auf einen Überdruck in den beispielsweise Wasser- und/oder Heizkreisläufen im Vergleich zu Atmosphärendruck und entsprechend in der verwendeten Vorrichtung zum Dämpfen von Schallgeräuschen.

Die zwei, drei, vier oder mehr Lagen können druck- und wasserdicht aufeinandergeklebt sein, wodurch die Verwendung beispielsweise in Heizkreisläufen möglich ist. Die Verwendung eines wasser- und hitzebeständigen Klebematerials, das zudem vorzugsweise das elastische Material nicht angreift und vorzugsweise Stoffe in das Wasser gar nicht oder nur in vordefinierten Mengen abgibt, wird bevorzugt. Zudem kann das Klebematerial auch den verschiedenen Drücken standhalten, in denen die erfindungsgemäße Vorrichtung verwendet wird.

Die zwei, drei, vier oder mehr Lagen elastischer Scheiben können jeweils aus dem gleichen Material bestehen, die Lagen elastischer Scheiben können aber auch aus unterschiedlichem Material bestehen. Die zwei, drei, vier oder mehr Lagen elastischer Scheiben können jeweils gleiche Dicken oder verschiedene Dicken aufweisen. Durch die Verwendung mehrerer Lagen elastischer Scheiben ergibt sich eine deutlich variable Gestaltung der elastischen Ringscheiben, wodurch es möglich wird, die Schallgeräusche in einer optimalen Weise zu dämpfen. Bei der Verwendung unterschiedlicher Materialien, z.B. von Materialien mit verschiedenen Elastizitäten, kann das Walken der elastischen Ringscheiben beispielsweise so erfolgen, dass eine Dämpfung von Schallgeräuschen auf einfache Weise möglich wird.

Bei drei oder mehr Lagen elastischer Scheiben können eine mittlere oder eine innenliegende Scheibe oder mehrere mittlere oder mehrere innenliegenden Scheiben perforiert sein. Durch die Perforation ergibt sich ein anderes Walkverhalten der Ringscheiben, wodurch ein verbessertes Dämpfungsergebnis der Schallgeräusche erreicht werden kann.

Der Durchmesser der Perforationslöcher in der einen mittleren oder der einen innenliegenden Scheibe oder der mehreren mittleren oder der mehreren innenliegenden elastischen Scheiben kann der Dicke der jeweiligen Scheibe entsprechen, der Durchmesser der Perforationslöcher kann kleiner oder größer sein als die Dicke der jeweiligen Scheibe und/oder die Perforationslöcher können unterschiedliche Durchmesser aufweisen. Die Durchmesser der Perforationslöcher der elastischen Scheibe oder Scheiben ermöglichen ein optimales Dämpfen der Schallgeräusche.

Die Abstände benachbarter Perforationslöcher in einer elastischen Scheibe können gleich groß oder unterschiedlich groß sein. Die Perforationslöcher können auf konzentrischen Kreisen angeordnet sein, wobei die Abstände benachbarter konzentrischer Kreise gleich groß oder verschieden groß sein können. Die Abstände können beispielsweise zu größeren Radien hin kontinuierlich zunehmen oder abnehmen. Es kann auch Bereiche geben, in denen mehrere benachbarte Kreise den gleichen Abstand aufweisen.

Die Perforationslöcher können beispielsweise auf beliebigen Kreislinien angeordnet sein, die Anordnung der Perforationslöcher kann beispielsweise eine Symmetrie aufweisen, z.B. Rotationssymmetrie oder die Perforationslöcher können beliebig angeordnet sein. In den verschiedenen Ringscheiben können elastische Scheiben verwendet werden, die jeweils die gleiche Anordnung der Perforationslöcher aufweisen. In den verschiedenen Ringscheiben können beispielsweise auch elastische Scheiben mit verschiedenen Anordnung der Perforationslöcher verwendet werden.

Durch die Wahl der Durchmesser und der Anordnung der Perforationslöcher ist es beispielsweise möglich, elastische Ringscheiben herzustellen, die zu einer Vorrichtung zum Dämpfen von Schallgeräuschen führen, welche die Schallgeräusche optimal dämpft.

Die Mehrzahl von elastischen Ringscheiben kann in einem Abstand zueinander im Zwischenraum zwischen Außenrohr und perforiertem Innenrohr angebracht werden. Der Abstand zwischen jeweils zwei unterschiedlichen Ringscheiben kann gleich groß oder verschieden groß sein. Beispielsweise kann der Abstand in einer Richtung von Außen- und Innenrohr zu- oder abnehmen. Die Abstände zwischen den Ringscheiben können beispielsweise jeweils 12 mm betragen. Haben die Ringscheiben einen Abstand zueinander, so kann im Bereich des perforierten Innenrohrs wie auch im Bereich zwischen Außenrohr und perforiertem Innenrohr der gleiche Druck vorliegen. Zudem kann der Abstand zwischen den einzelnen Ringscheiben ein Walken der elastischen Ringscheiben ermöglichen, was zu einer Dämpfung der Schallgeräusche führen kann. Angepasste Abstände zwischen den Ringscheiben ermöglichen beispielsweise eine Optimierung entsprechend der Wasser- und/oder Heizkreisläufe oder der zu dämpfenden Frequenzen, in denen die erfindungsgemäße Vorrichtung verwendet werden soll.

Die Perforationslöcher des Innenrohrs können verschiedene Durchmesser in verschiedenen Bereichen entlang des Rohrs aufweisen. Die verschiedenen Bereiche können gleiche oder unterschiedliche Länge aufweisen. Die Länge des Rohrs kann in verschieden oder gleich große Bereiche unterteilt sein, in denen die Durchmesser der Perforationslöcher in benachbarten Bereichen unterschiedlich groß oder gleich groß sein können. Zudem kann die Anzahl der Perforationslöcher in den verschiednen Bereichen entlang des Rohrs unterschiedlich groß sein. Die verschieden großen Perforationslöcher können eine Dämpfung der Schallgeräusche in unterschiedlichen Frequenzbereichen ermöglichen.

Beispielsweise kann ein perforiertes Innenrohr, das beispielsweise eine Länge zwischen 3 m und 4m besitzt, im Anfangs- und Endbereich des Rohrs keine Perforationslöcher aufweisen, wobei diese Bereiche beispielsweise eine Länge zwischen 5 mm und 30 mm aufweisen können. Außerhalb dieser Anfangs- und Endbereiche des Innenrohrs können Perforationslöcher vorliegen, deren Durchmesser beispielsweise außerhalb des Anfangsbereichs bis hin zum Endbereich zunehmen kann. Es ist auch möglich, dass das Rohr in zwei, drei, vier oder mehr Bereichen Perforationslöcher mit dem gleichen Radius aufweist, wobei aber jeweils eine verschieden große Anzahl von Perforationslöchem in den jeweiligen Bereichen vorhanden sein kann.

Beispielsweise können in einem ersten Bereich, der eine Länge zwischen 10 mm und 40 mm aufweisen kann, zwischen 100 und 150 Perforationslöcher vorhanden sein, die einen Durchmesser zwischen 1,5 mm und 4,5 mm aufweisen können. Nachfolgende Bereiche können länger sein als dieser erste Bereich, können aber auch kürzer sein. Die Anzahl der Perforationslöcher kann in den verschiedenen Bereichen beispielsweise zwischen 100 und 800 liegen und/oder die Durchmesser der Perforationslöcher können beispielsweise zwischen 1,5 mm und 10 mm liegen. Durch geschickte Wahl von der Länge eines Bereichs und der Zahl vorhandener Perforationslöcher kann beispielsweise erreicht werden, dass der Lochanteil in verschiedenen Bereichen jeweils etwa gleich groß ist (beispielsweise mit einer Abweichung von ±5%, ±3%, ±1% oder ±0,3%). Der Lochanteil kann in verschiedenen Bereichen aber auch zu- oder abnehmen.

Die Wandstärke des Innenrohrs kann so gewählt werden, dass die Dicke minimal ist und dabei den Anforderungen der Anwendung z.B. hinsichtlich Steifigkeit genügt, um beispielsweise einen Betrieb bei 25 bar standzuhalten. Es kann aber auch eine fest vorgegebene Dicke von beispielsweise 1 mm, 2mm, 3 mm oder mehr verwendet werden.

Ein Heizkreislauf kann ein, zwei, drei oder mehr Vorrichtungen zum Dämpfen von Schallgeräuschen umfassen. Dadurch können beispielsweise Pumpengeräusche und Fließgeräusche gedämpft werden

Bevorzugte Ausführungsformen der Vorrichtung sollen anhand der beiliegenden Figuren erläutert werden. Dabei zeigt:
Figur 1: einen Schnitt durch eine Vorrichtung zum Dämpfen von Schallgeräuschen;
Figur 2: eine Draufsicht auf eine elastische Scheibe mit Perforationslöchern.

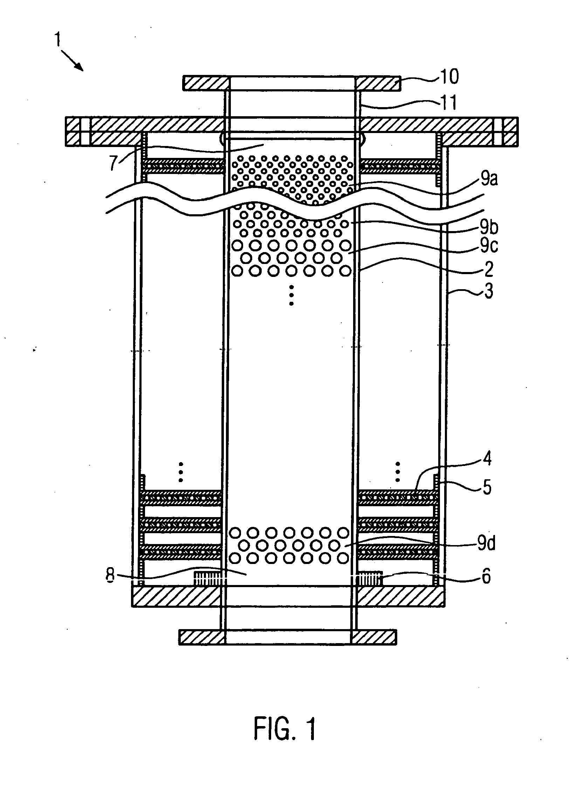

In Figur 1 ist ein Schnitt durch eine hier zylindrisch aufgebaute Vorrichtung 1 gezeigt, die zum Dämpfen von Schallgeräuschen dient und zwischen einem Außenrohr 3 und einem perforierten Innenrohr 2 ein Schallabsorptionssystem umfasst, das eine Temperaturbeständigkeit von mindestens 80 Grad Celsius aufweist. Das perforierte Innenrohr kann durch eine Führung 6 positioniert werden.

In einem Anfangsbereich 7 und in einem Endbereich 8 des Innenrohrs befinden sich keine Perforationslöcher. Entlang des in Figur 1 dargestellten perforierten Innenrohrs 2 existieren mehrere Bereich 9a-9d, die unterschiedliche Längen besitzen und in denen die Durchmesser der Perforationslöcher jeweils verschieden groß sind.

Im Bereich zwischen Außenrohr 3 und perforiertem Innenrohr 2 können sich Ringscheiben 4 aus elastischem Material befinden. Der Abstand zwischen den einzelnen Ringscheiben 4 kann durch Distanzstücke 5 festgelegt werden. Die hier dargestellten Ringscheiben bestehen aus drei Lagen elastischer Scheiben, wobei die mittlere Scheibe perforiert ist. Exemplarisch sind in Figur 1 vier Ringscheiben dargestellt, wobei aber in der Vorrichtung 1 der gesamte Bereich zwischen Außenrohr 3 und perforiertem Innenrohr 2 mit Ringscheiben 4 ausgefüllt sein kann (unter Beachtung der Abstände zwischen den jeweiligen Scheiben). Der Bereich innerhalb des perforierten Innenrohrs 2 ist frei von Ringscheiben 4. Zur Verwendung der Vorrichtung 1 in einem Wasserkreislauf sind zudem Flansche 10 und Flanschrohr 11 vorhanden.

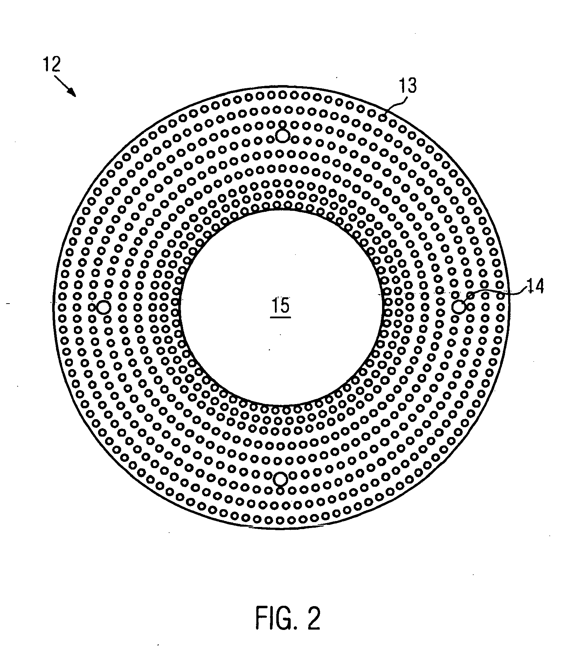

Figur 2 zeigt eine mögliche Anordnung der Perforationslöcher 13 in einer elastischen Scheibe 12, die ein Teil der Ringscheiben 4 sein kann. Die elastische Scheibe 12 kann Führungslöcher 14 enthalten sowie eine Durchführung 15 für das perforierte Innenrohr 2. In der Darstellung sind die Perforationslöcher 13 in konzentrischen Kreisen angeordnet, wobei die Durchmesser der Perforationslöcher 13 jeweils gleich groß sind. Die drei konzentrischen Kreise um die Durchführung 15 für das perforierte Innenrohr 2 besitzen hier einen kleineren Abstand als weiter außen liegende Kreise.

Mit einer beispielhaften Vorrichtung, bei welcher der Durchmesser des Außenrohrs zwischen 35 cm und 45 cm liegt, der Durchmesser des perforierten Innenrohrs zwischen 15 cm und 20 cm liegt, und die Vorrichtung eine Länge zwischen 3 m und 3,5 m besitzt, ist es möglich, in einem Frequenzbereich bis hin zu 800 Hz beispielsweise eine Dämpfung von 20 dB zu erreichen.

Es ist beispielsweise auch möglich, Vorrichtungen mit kleineren und/oder größeren Durchmessern von Innen- und/oder Außenrohr bei einer kleineren und/oder größeren Länge der Vorrichtung zum Dämpfen von Schallgeräuschen zu bauen. Mögliche Längen sind z. B. größer als 0,5, 1,0, 1,5, 2,0, oder 2,5 Meter und/oder kleiner als 1,0, 1,5, 2,0, 2,5, 3,0 oder 3,5 Meter.

## Patentansprüche

1. Vorrichtung (1) zum Dämpfen von Schallgeräuschen mit einem Außenrohr (3) und einem perforierten Innenrohr (2), wobei sich zwischen Außenrohr und perforiertem Innenrohr ein Schallabsorptionssystem mit einer Temperaturbeständigkeit bis mindestens 80 Grad Celsius befindet, wobei das Schallabsorptionssystem eine Mehrzahl von elastischen, z.B. gummielastischen, Ringscheiben (4) umfasst, **dadurch gekennzeichnet, dass** eine elastische Ringscheibe (4) zwei, drei, vier oder mehr Lagen elastischer, z.B. gummielastischer, Scheiben umfasst, die aufeinander aufgebracht sind.

2. Vorrichtung nach Anspruch 1, **dadurch gekennzeichnet, dass** die Vorrichtung insgesamt eine Temperaturbeständigkeit bis mindestens 80 Grad Celsius aufweist.

3. Vorrichtung nach Anspruch 1 oder 2, **dadurch gekennzeichnet, dass** die Vorrichtung eine Druckbeständigkeit bis mindestens 25 bar aufweist.

4. Vorrichtung nach Ansprüchen 1 bis 3, **dadurch gekennzeichnet, dass** die zwei, drei, vier oder mehr Lagen elastischer Scheiben druck- und wasserdicht aufeinander geklebt sind.

5. Vorrichtung nach Ansprüchen 1 bis 4, **dadurch gekennzeichnet, dass** die zwei, drei, vier oder mehr Lagen elastischer Scheiben aus gleichem Material oder aus unterschiedlichem Material bestehen oder dieses umfassen.

6. Vorrichtung nach Ansprüchen 1 bis 5, **dadurch gekennzeichnet, dass** die zwei, drei, vier oder mehr Lagen elastischer Scheiben die gleiche Dicke oder unterschiedliche Dicken aufweisen.

7. Vorrichtung nach Ansprüchen 1 bis 6, **dadurch gekennzeichnet, dass** bei drei oder mehr Lagen elastischer Scheiben eine mittlere oder eine innenliegende Scheibe oder mehrere mittlere oder mehrere innenliegenden Scheiben perforiert sind.

8. Vorrichtung nach Anspruch 7, **dadurch gekennzeichnet, dass** der Durchmesser von Perforationslöchern (13) der einen mittleren oder der einen innenliegenden Scheibe oder der mehreren mittleren oder der mehreren innenliegenden elastischen Scheiben der Dicke der jeweiligen Scheibe entspricht, der Durchmesser der Perforationslöcher kleiner oder größer als die Dicke der einen mittleren oder der einen innenliegenden Scheibe oder der mehreren mittleren oder der mehreren innenliegenden elastischen Scheiben ist oder dass die Perforationslöcher unterschiedliche Durchmesser aufweisen.

9. Vorrichtung nach Ansprüchen 7 und 8, **dadurch gekennzeichnet, dass** Abstände benachbarter Perforationslöcher gleich groß oder unterschiedlich groß sind.

10. Vorrichtung nach den Ansprüchen 7 bis 9, **dadurch gekennzeichnet, dass** die Perforationslöcher auf konzentrischen Kreisen angeordnet sind, wobei die konzentrischen Kreise jeweils gleich große oder unterschiedlich große Abstände aufweisen können.

11. Vorrichtung nach den Ansprüchen 7 bis 10, **dadurch gekennzeichnet, dass** die Perforationslöcher auf gekrümmten Linien angeordnet sind, in rotationssymmetrischen Mustern oder beliebig angeordnet sind.

12. Vorrichtung nach Ansprüchen 1 bis 11, **dadurch gekennzeichnet, dass** die Mehrzahl von elastischen Ringscheiben (4) mit einem Abstand zueinander im Zwischenraum zwischen Außenrohr (3) und perforiertem Innenrohr (2) angebracht sind.

13. Vorrichtung nach Anspruch 12, **dadurch gekennzeichnet, dass** der Abstand zwischen jeweils zwei unterschiedlichen Ringscheiben (4) gleich groß oder verschieden groß ist.

14. Vorrichtung nach Ansprüchen 1 bis 13, **dadurch gekennzeichnet, dass** das perforierte Innenrohr (2) verschiedene Durchmesser von Perforationslöchern in verschiedenen Bereichen (9a-9d) entlang des Rohrs aufweist, wobei die verschiedenen Bereiche gleiche oder unterschiedliche Längen aufweisen können.

15. Vorrichtung nach Anspruch 14, **dadurch gekennzeichnet, dass** die Anzahl der Perforationslöcher in den verschiedenen Bereichen unterschiedlich groß ist.

16. Heizkreislauf und/oder Wasserkreislauf, **dadurch gekennzeichnet, dass** ein, zwei, drei oder mehr Vorrichtungen (1) zum Dämpfen von Schallgeräuschen nach einem der Ansprüche 1 bis 15 umfasst sind.

## Claims

1. A device (1) for suppressing acoustic noise with an outer tube (3) and a perforated inner tube (2), there being located between the outer tube and perforated inner tube an acoustic absorption system with heat resistance up to at least 80 degrees Celsius, the acoustic absorption system comprising a plurality of elastic, for example rubber-elastic, annular discs (4), **characterised in that** an elastic annular disc (4) comprises two, three, four or more plies of elastic, for example rubber-elastic, discs which are placed on one another.

2. A device according to claim 1, **characterised in that** the device overall exhibits heat resistance up to at least 80 degrees Celsius.

3. A device according to claim 1 or claim 2, **characterised in that** the device exhibits pressure resistance up to at least 25 bar.

4. A device according to claims 1 to 3, **characterised in that** the two, three, four or more plies of elastic discs are adhesively bonded to one another in pressure- and water-tight manner.

5. A device according to claims 1 to 4, **characterised in that** the two, three, four or more plies of elastic discs consist of or comprise the same material or different materials.

6. A device according to claims 1 to 5, **characterised in that** the two, three, four or more plies of elastic discs have the same thickness or different thicknesses.

7. A device according to claims 1 to 6, **characterised in that**, in the case of three or more plies of elastic discs, a middle or internal disc or a plurality of middle or a plurality of internal discs are perforated.

8. A device according to claim 7, **characterised in that** the diameter of perforation holes (13) of the middle or internal disc or of the plurality of middle or the plurality of internal elastic discs corresponds to the thickness of the respective disc, the diameter of the perforation holes is smaller or greater than the thickness of the middle or internal disc or of the plurality of middle or the plurality of internal elastic discs or that the perforation holes have different diameters.

9. A device according to claims 7 and 8, **characterised in that** adjacent perforation holes are identically or differently spaced apart.

10. A device according to claims 7 to 9, **characterised in that** the perforation holes are arranged in concentric circles, wherein the concentric circles may in each case be identically or differently spaced apart.

11. A device according to claims 7 to 10, **characterised in that** the perforation holes are arranged in curved lines, in rotationally symmetrical patterns or are arranged as desired.

12. A device according to claims 1 to 11, **characterised in that** the plurality of elastic annular discs (4) are mounted spaced apart from one another in the interspace between the outer tube (3) and perforated inner tube (2).

13. A device according to claim 12, **characterised in that** two different annular discs (4) are in each case identically or differently spaced apart.

14. A device according to claims 1 to 13, **characterised in that** the perforated inner tube (2) comprises various diameters of perforation holes in various zones (9a-9d) along the tube, wherein the various zones may be of identical or different length.

15. A device according to claim 14, **characterised in that** the number of perforation holes differs in the various zones.

16. A heating circuit and/or water circuit, **characterised in that** it comprises one, two, three or more devices (1) for suppressing acoustic noise according to any one of claims 1 to 15.

## Revendications

1. Dispositif (1) pour amortir des bruits acoustiques avec un tube extérieur (3) et avec un tube intérieur perforé (2), un système d'absorption acoustique, qui a une résistance à la température allant jusqu'à 80 degrés Celsius au moins, se trouvant entre le tube extérieur et le tube intérieur perforé, le système d'absorption acoustique comprenant plusieurs plaques annulaires élastiques (4), par exemple en caoutchouc, **caractérisé en ce qu'**une plaque annulaire élastique (4) comprend deux, trois, quatre couches de plaques élastiques ou plus, par exemple en caoutchouc, qui sont disposées les unes sur les autres.

2. Dispositif selon la revendication 1, **caractérisé en ce que** le dispositif présente globalement une résistance à la température qui va jusqu'à 80 degrés Celsius au moins.

3. Dispositif selon la revendication 1 ou 2, **caractérisé en ce que** le dispositif présente une résistance à la pression qui va jusqu'à 25 bar au moins.

4. Dispositif selon les revendications 1 à 3, **caractérisé en ce que** les deux, trois, quatre couches de plaques élastiques ou plus sont collées les unes sur les autres de manière étanche à la pression et à l'eau.

5. Dispositif selon les revendications 1 à 4, **caractérisé en ce que** les deux, trois, quatre couches de plaques élastiques ou plus sont en une matière identique ou en des matières différentes ou comprennent cette ou ces matières.

6. Dispositif selon les revendications 1 à 5, **caractérisé en ce que** les deux, trois, quatre couches de plaques élastiques ou plus présentent une épaisseur identique ou des épaisseurs différentes.

7. Dispositif selon les revendications 1 à 6, **caractérisé en ce que**, dans le cas de trois couches de plaques élastiques ou plus, une plaque médiane ou une plaque intermédiaire ou plusieurs plaques médianes ou plusieurs plaques intermédiaires sont perforées.

8. Dispositif selon la revendication 7, **caractérisé en ce que** le diamètre des trous de perforation (13) de la ou des plaques élastiques médianes ou intermédiaires correspond à l'épaisseur de la plaque respective, le diamètre des trous de perforation est plus petit ou plus grand que l'épaisseur de la ou des plaques élastiques médianes ou intermédiaires ou les trous de perforation ont des diamètres différents.

9. Dispositif selon les revendications 7 et 8, **caractérisé en ce que** des distances entre des trous de perforation voisins sont identiques ou différentes.

10. Dispositif selon les revendications 7 à 9, **caractérisé en ce que** les trous de perforation sont disposés sur des cercles concentriques, les cercles concentriques pouvant avoir entre eux des distances identiques ou différentes.

11. Dispositif selon les revendications 7 à 10, **caractérisé en ce que** les trous de perforation sont disposés sur des lignes courbes, selon des motifs symétriques en rotation ou de manière quelconque.

12. Dispositif selon les revendications 1 à 11, **caractérisé en ce que** les disques annulaires élastiques (4) sont placés avec une certaine distance les uns par rapport aux autres dans l'intervalle entre le tube extérieur (3) et le tube intérieur perforé (2).

13. Dispositif selon la revendication 12, **caractérisé en ce que** la distance entre à chaque fois deux plaques annulaires différentes (4) est identique ou différente.

14. Dispositif selon des revendications 1 à 13, **caractérisé en ce que** le tube intérieur perforé (2) a différents diamètres de trous de perforation dans différentes zones (9a à 9d) le long du tube, les différentes zones pouvant avoir des longueurs identiques ou différentes.

15. Dispositif selon la revendication 14, **caractérisé en ce que** le nombre des trous de perforation dans les différentes zones est différent.

16. Circuit de chauffage et/ou circuit d'eau, **caractérisé en ce qu'**il comprend un, deux, trois dispositifs (1) ou plus pour amortir des bruits acoustiques selon l'une des revendications 1 à 15.
